# EUROPEAN PATENT SPECIFICATION

(11) **EP 3 526 076 B1**
(45) Date of publication and mention of the grant of the patent: **23.06.2021**
(21) Application number: 17787552.3
(22) Date of filing: 11.10.2017
(51) Int. Cl.: B60N 2/80, B60N 2/90, B60N 2/64, B60N 2/68, B60N 2/70, B60N 2/66, B60N 2/62

(54) **ADJUSTABLE SEAT**
VERSTELLBARER SITZ
SIÈGE RÉGLABLE

(30) Priority: 11.10.2016 GB 201617247
(43) Date of publication of application: 21.08.2019
(73) Proprietor: McLaren Automotive Limited, Woking, Surrey GU21 4YH (GB)
(72) Inventor: LETT, Barry, Chobham, Surrey GU24 8PH (GB)
(74) Representative: Slingsby Partners LLP
(86) International application number: PCT/GB2017/053074
(87) International publication number: WO 2018/069701

(56) References cited:
- DE-A1- 19 834 163
- DE-A1-102009 012 693
- DE-U1- 29 815 521

## Description

This invention relates to adjustable seats, for example for vehicles.

Many vehicles have seats that are adjustable in order to allow an occupant to be comfortable, to reach the vehicle's controls or to have good visibility. Typically, the available adjustments include rake, height and reach. In some seats there might be other adjustments such as base angle, side bolsters that can be inflated, a headrest that can be moved up and down and a thigh bolster that can be moved fore and aft.

These adjustments can be provided in a number of ways. For rake adjustment, the seat base and the seat squab are normally formed as two separate units. Each unit has a rigid frame that is covered with upholstery. The two units are joined together with a revolute joint mechanism which allows the angle of the squab to be adjusted relative to the base. For height adjustment, reach adjustment and base angle adjustment the base can be mounted to the floor of the vehicle by a suitable support mechanism. Adjustable side bolsters can be provided by means of inflatable bladders located between the rigid seat frame and the upholstery. A head rest can be slideably mounted on rails extending from the seat squab. The mechanisms that provide these adjustments can be manually or electrically operated.

Typical seats having these forms of adjustment suffer from a number of limitations, particularly that the seat parts themselves, and the mechanisms for adjusting them, are heavy.

Some vehicles, notably racing cars, have bucket-type seats which comprise a rigid shell, optionally with upholstery over it. These seats are light, but typically have little capacity to be adjusted to fit an occupant. In particular, when the shell extends through the base and squab of the seat, the rake of the squab cannot be adjusted without also adjusting the angle of the base.

US 5,884,968 discloses a seat having a bladder for adjusting the thoracic angle of the seat. A damper is provided in case the thoracic bladder is insufficient to stop the headrest moving rearwards in a crash.

There is a need for an improved adjustable seat.

The seat according to the invention comprises the features of claim 1.

According to one aspect of the present invention there is provided a seat having a base support extending under a base of the seat and a squab support extending behind a squab of the seat, the squab support being integral with the base support, the seat presenting a base seating surface upward of the base support and a squab seating surface forward of the squab support, and the seat comprising a first inflatable bladder disposed between the squab support and the squab seating surface for permitting adjustment of the inclination of the squab seating surface relative to the base seating surface.

The base support and the squab support may be portions of a laminar seat shell.

The squab seating surface may be defined by an upholstery layer at least partially covering the squab support. The bladder may be located between the squab support and the upholstery layer.

The seat may comprise a resiliently compressible layer located between the upholstery layer and the bladder.

The bladder may be such that the inclination of the squab seating surface relative to the inclination of the base seating surface can be varied by greater than 5° or by greater than 8° by inflation of the bladder.

The seat may comprise a headrest. The headrest may be configured so that the position of the forward surface of the headrest is independent of the state of inflation of the bladder.

The headrest may comprise a headrest support attached to the squab support, a headrest surface forward of the headrest support and a second inflatable bladder located between the headrest support and the headrest surface.

The headrest support may be integral with the squab support.

The seat may comprise a thigh roll at the forward end of the base support, the thigh roll comprising a third inflatable bladder located above the forward part of the base support.

The seat may comprise a fourth inflatable bladder, the fourth bladder and the first bladder both being disposed between the squab support and the squab seating surface for permitting adjustment of the inclination of the squab seating surface relative to the base seating surface.

One of the first and fourth bladders may be located in a thoracic region of the seat.

The other of the first and fourth bladders may be located in a lumbar region of the seat.

According to a second aspect of the present invention there is provided a seat having a base support extending under a base of the seat and a squab support extending behind a squab of the seat, the seat presenting a base seating surface upward of the base support and a squab seating surface forward of the squab support, and the seat comprising an inflatable bladder disposed between the squab support and the squab seating surface for permitting adjustment of the inclination of the squab seating surface relative to the base seating surface, the squab support and the bladder being configured so that, with the base seating surface substantially horizontal and/or with the seat installed in a horizontal environment, the inclination of the squab seating surface can be inclined to greater than 28° to vertical.

The squab support and the bladder may be configured so that, with the seat installed in a horizontal environment, the inclination of the squab seating surface can be inclined to greater than 32° to vertical.

The base support may be integral with the squab support.

The seat may comprise a first inflatable bladder located in a thoracic region of the seat, and a second inflatable bladder located in a lumbar region of the seat and having a fixed position relative to the squab support; wherein the first and second bladders may be disposed between the squab support and the squab seating surface for permitting adjustment of the inclination of the squab seating surface relative to the base seating surface, the squab support and the first and second bladders may be configured so that, with the base seating surface substantially horizontal, the inclination of the squab seating surface can be inclined to greater than 28° to vertical.

The seat may have a headrest comprising a headrest support, a headrest outer surface forward of the headrest support and an inflatable bladder located between the headrest support and the headrest outer surface for altering the fore and aft position of the headrest outer surface.

The seat may have a base comprising a base support, a base outer surface above the base support and a thigh roll at the forward end of the base support, the thigh roll comprising an inflatable bladder located between the forward part of the base support and the base outer surface.

According to a third aspect of the present invention there is provided a seat comprising: a base support extending under a base of the seat and presenting a base seating surface upward of the base support; a squab support extending behind a squab of the seat and presenting a squab seating surface forward of the squab support; a headrest presenting a forward surface; and an inflatable bladder disposed between the squab support and the squab seating surface and configured for permitting adjustment of the inclination of the squab seating surface relative to the base seating surface independently of the position of the headrest forward surface relative to the base seating surface.

According to a fourth aspect of the present invention there is provided a seat comprising: a base support extending under a base of the seat and presenting a base seating surface upward of the base support; a squab support extending behind a squab of the seat and presenting a squab seating surface forward of the squab support; a first inflatable bladder disposed between the squab support and the squab seating surface in the lumbar region of the seat and configured for permitting adjustment of the inclination of the squab seating surface in the lumbar region relative to the base seating surface; a second inflatable bladder disposed between the squab support and the squab seating surface in the thoracic region of the seat and configured for permitting adjustment of the inclination of the squab seating surface in the thoracic region relative to the base seating surface; and a control mechanism configured for collectively controlling the inflation of the first and second bladders in response to a user input such that the inclination of the squab seating surface in the lumbar region can be altered whilst the inclination of the squab seating surface in the thoracic region remains substantially constant.

Whilst the inclination of the squab seating surface in the thoracic region remains substantially constant it may be more upright than the inclination of the squab seating surface in the lumbar region.

The control mechanism may be configured to, whilst controlling the inflation of the first and second bladders as set out above, maintain the inclination of the thoracic region of the seat at less than 28° to vertical over a range of inclination of the lumbar region of the seat that exceeds 34° to vertical.

The seat may be installed in a vehicle. The seat may be installed in the vehicle in such a way that there is no provision for user adjustment of the angle of the base support and/or the squab support relative to the body of the vehicle. For example, the base support may be bolted to the body of the vehicle.

According to a fifth aspect of the present invention there is provided a seat having a base support extending under a base of the seat and a squab support extending behind a squab of the seat, the squab support being integral with the base support, the seat presenting a base seating surface upward of the base support and a squab seating surface forward of the squab support, and the seat comprising: a first inflatable bladder located in a thoracic region of the seat; and a second inflatable bladder located in a lumbar region of the seat and having a fixed position relative to the squab support; wherein the first bladder and second bladder are both disposed between the squab support and the squab seating surface for permitting adjustment of the inclination of the squab seating surface relative to the base seating surface.

The base support and the squab support may be portions of a laminar seat shell. The squab seating surface may be defined by an upholstery layer at least partially covering the squab support, and at least one bladder may be located between the squab support and the upholstery layer. A resiliently compressible layer may be located between the upholstery layer and the at least one bladder.

The bladders may be such that the inclination of the squab seating surface relative to the inclination of the base seating surface can be varied by greater than 5° by inflation of the bladders. The bladders may be such that the inclination of the squab seating surface relative to the inclination of the base seating surface can be varied by greater than 8° by inflation of the bladders. The seat may comprise a headrest and the headrest may be configured so that the position of the forward surface of the headrest is independent of the state of inflation of the first and second bladders. The headrest may comprise a headrest support attached to the squab support, a headrest surface forward of the headrest support and a third inflatable bladder located between the headrest support and the headrest surface. The headrest support may be integral with the squab support.

The seat may comprise a thigh roll at the forward end of the base support, the thigh roll may comprise a fourth inflatable bladder located above the forward part of the base support. The first inflatable bladder may be configured for permitting adjustment of the inclination of the squab seating surface in the lumbar region relative to the base seating surface. The second inflatable bladder may be configured for permitting adjustment of the inclination of the squab seating surface in the thoracic region relative to the base seating surface. The first inflatable bladder may have a fixed position relative to the squab support.

According to a sixth aspect of the present invention there is provided a seat comprising: a base support extending under a base of the seat and presenting a base seating surface upward of the base support; a squab support extending behind a squab of the seat and presenting a squab seating surface forward of the squab support; a headrest presenting a forward surface; a first inflatable bladder located in a thoracic region of the seat; and a second inflatable bladder located in a lumbar region of the seat and having a fixed position relative to the squab support; wherein the first bladder and second bladder are both disposed between the squab support and the squab seating surface and configured for permitting adjustment of the inclination of the squab seating surface relative to the base seating surface independently of the position of the headrest forward surface relative to the base seating surface.

The present invention will now be described by way of example with reference to the drawings.

In the drawings:
Figure 1 is a view of a seat from in front, above and one side.
Figure 2 is a cross-section on the line A-A of figure 1.
Figure 3 shows an inflation system for the seat of figure 1.

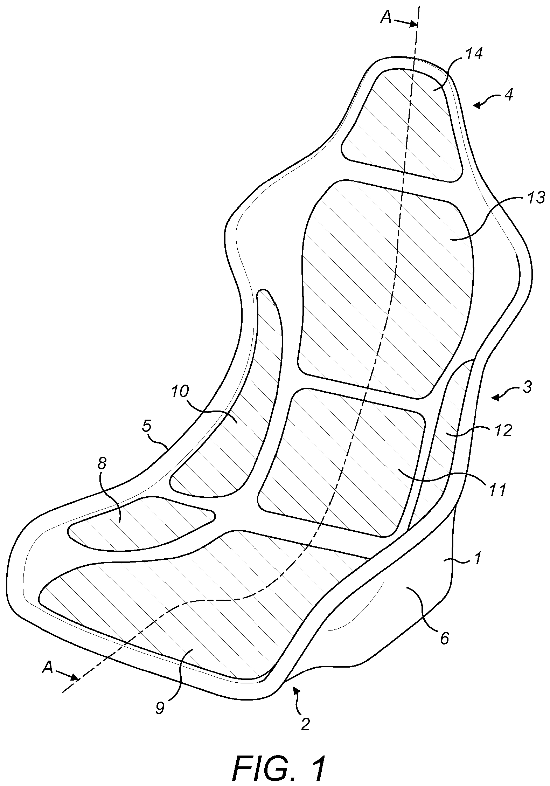

The seat of figure 1 comprises a rigid shell 1. It has the general form of a seat, with a base part 2, a squab part 3 and a headrest part 4. The base part is intended for an occupant of the seat to sit on it. The squab part extends upwards from the rear of the base part. The headrest part extends upwards from the upper end of the squab part. Wings 5, 6, extend upwardly from the left and right sides of the base part and connect to the lower lateral edges of the squab part.

In use, an occupant of the seat sits on the base. Their back is supported by the squab part. The headrest part can serve to restrain the occupant's head against excessive rearward motion in the event of a collision or as a rest for the occupant's head during normal use. The wings can help to brace the squab part with respect to the base, to inhibit the shell from flexing. They can also help to restrain an occupant in the seat under lateral forces, e.g. when a vehicle in which the seat is carried is cornering.

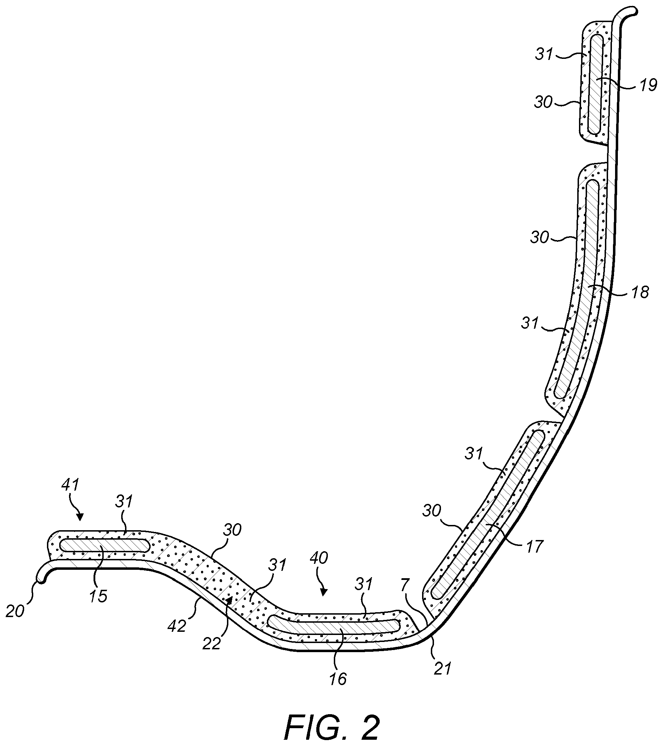

The base part 2 may be generally flat. Alternatively, as shown in figure 2, it may have a dished pelvic zone 40 at its rear, and at its front a thigh support zone or thigh roll 41 which is raised relative to the pelvic zone. A formation of this nature can improve comfort by helping to support an occupant's thighs. It can also help to restrain the occupant in the seat during deceleration by virtue of the occupant's ischial region being held in the dished pelvic zone.

The squab part 3 may be generally flat or it may be concave towards the front of the seat. Roughly, the general plane of the squab region may extend upwards at an angle of between 80 and 45 degrees to the general plane of the base region.

The headrest region may be an extension of the squab region.

The shell 1 may be a one-piece structure or it may be formed of multiple parts bonded or otherwise affixed together. It may be a laminar structure. It may, for example, be formed of a composite material such as fibre reinforced polymer. It may be moulded to shape.

The shell presents a seating surface which is directed generally upwards and forwards. In some of the seating surface, for instance at 7, the shell is exposed. In other parts of the seating surface the shell is covered by cushion pads 8-14. Some of the cushion pads are shown in cross-section in figure 2. Each cushion pad comprises one or more inflatable bladders 15-19. It would be possible for some cushion pads to contain no bladder. On its lower or rear surface, each cushion pad is attached to the shell, for example by an adhesive or by mechanical fixings such as press studs. The rear surface of each cushion pad is therefore secure relative to the shell. Thus, each cushion pad may have a position that is fixed relative to the shell. This means that the one or more inflatable bladders 15-19 comprised within a respective cushion pad may have a position that is fixed relative to the shell. Each inflatable bladder may have a position that is fixed relative to the shell. This means that the inflatable bladders may not be capable of moving over each other. It will be appreciated that whilst the position of the cushion pads, and thus the bladders, may be fixed relative to the shell the bladders may grow and reduce in size during inflation and deflation respectively. Thus the whilst the general position of each of the bladders may be fixed some change in shape and thus minor change in position is anticipated when the overall position is fixed.

The exposed surface of each cushion pad is covered by a layer of an upholstery material 30 such as cloth or leather. Underlying the upholstery material is a layer of a resilient buffer material 31 such as a solid foam or a rubber pad or sheet. The buffer material is located between the bladders and the upholstery material. In some regions the buffer material overlies a bladder. In other regions the buffer material directly overlies the shell 1.

The presence of the resilient buffer material 31 between the bladders and the seating surface of the cushions means that the perceived firmness of the seat can be relatively unaffected by the extent to which the bladders are inflated.

The arrangement of the cushion pads is as follows.
- A base cushion pad 9 covers the majority of the base part 2 of the shell. In a longitudinal direction the base cushion pad extends from the forward edge 20 of the seat to the junction 21 between the base region 2 and the squab region 3. In a lateral direction the base cushion pad extends from one lateral edge of the base region to the other. In the thigh support zone 41 of the seat there is an inflatable bladder 15 between the shell and the outer surface of the cushion pad. In the pelvic zone 40 there is an inflatable bladder 16 between the shell and the outer surface of the cushion pad. In the example of figures 1 and 2 there is a region 22 where there is no bladder between the shell and the outer surface of the cushion pad. That region coincides with the upwardly directed wall 42 of the shell that bridges between the pelvic zone and the thigh support zone.
- A lumbar cushion pad 11 covers the lower region of the squab part 3 of the shell. In a vertical direction the lumbar cushion extends generally from the lower end of the squab part to the mid-point of the squab part. The lumbar cushion contains an inflatable bladder 17 between its outer surface and the shell. The position of the lumbar cushion pad 11, and thus inflatable bladder 17, may be fixed relative to the shell, thus the lumbar cushion pad 11, and thus inflatable bladder 17, may not be capable of moving in a direction parallel to a surface defined by the shell.
- A thoracic cushion pad 13 covers the upper part of the squab part 3 of the shell. In a vertical direction the thoracic cushion extends generally from the mid-point of the squab part to the upper end of the squab part. The thoracic cushion contains an inflatable bladder 18 between its outer surface and the shell. The thoracic cushion pad 13, and thus inflatable bladder 18, may extend in a vertical direction such that it is adjacent to the lumbar cushion pad 11. Thus, the lumbar cushion pad 11, and by extension the inflatable bladder 17, may be separated from the thoracic cushion pad 13. Inflatable bladder 17 and inflatable bladder 18 may not overlap over the surface of the shell.
- A head cushion pad 14 covers the major area of the headrest part 4 of the shell. The head cushion contains an inflatable bladder 19 between its outer surface and the shell.
- Thigh bolster cushion pads 8 are attached to the lower regions of the inward-facing surfaces of the wings 5, 6. Each thigh bolster cushion contains an inflatable bladder. Only one of the thigh bolster cushion pads is visible in figure 1.
- Waist bolster cushion pads 10, 12 are attached to the upper regions of the inward-facing surfaces of the wings 5, 6. Each waist bolster cushion contains an inflatable bladder.

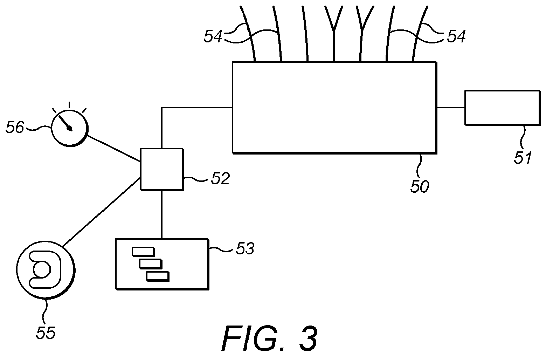

The bladders can be inflated or deflated to adapt the contour of the face of the seat to an occupant. Figure 3 shows a control system for controlling the operation of the inflatable bladders. The control system comprises a manifold valve unit 50, a compressor 51, a control circuit 52 and a user interface device 53. The compressor is arranged to compress ambient air and supply the compressed air to the manifold valve unit. The manifold valve unit has a number of outlets which are each connected by a respective hose 54 to a respective one of the bladders, or to a pair of the bladders. The manifold valve unit has a valve associated with each outlet. Each valve can be set to one of three positions: (i) to seal the respective outlet, (ii) to vent the respective outlet to the atmosphere or (iii) to couple the respective outlet to the compressor 51. The user interface device 53 may be a series of switches, a touch screen or another form of input device. The user interface allows an occupant of the seat to provide inputs in relation to each bladder in the seat. Some bladders, e.g. bladders 9, 11, 13 and 14 may be operated individually. Other bladders, e.g. bladders 8 and 10/12 may be operated jointly in left and right pairs. The control circuit 52 is configured to receive inputs from the user interface device 53 and to control the valves of the manifold valve unit in dependence on those inputs. When no input is being received in respect of a particular bladder the control circuit sets the valve for that bladder to the sealed condition. That locks whatever air is in the bladder in place. When an input is being received to deflate a particular bladder the control circuit sets the valve for that bladder to vent to the atmosphere. When an input is being received to inflate a particular bladder the control circuit activates the compressor 51 and sets the valve for that bladder to couple its outlet to the compressor. In this way an occupant of the seat can cause the bladders to inflate and deflate as desired.

Each bladder is an airtight pocket, which can be inflated by filling with air or another fluid and deflated by withdrawal of the fluid from the bladder. Each bladder may be formed of flexible material. Each bladder may be formed of an elastic material. Each bladder may be formed of a sheet material. Each bladder may contain flexible and/or resilient webs or other connectors extending across its interior from one exterior wall to the opposite exterior wall: for example between its wall facing the shell 1 and its outermost wall. These can inhibit the bladder from adopting an overly rotund form when it is inflated. Each bladder may be formed of an elastomeric material such as a polyurethane.

The anatomical functions of the seat will now be described.

When an occupant is sitting in the seat they are engaged with the cushion pads in the following way:
- The occupant's ischium is supported by the rear bladder 16 of the base cushion pad.
- The upper parts of the occupant's thighs may be supported by the bridging wall 42, or the bridging wall may serve to restrain the occupant's upper thighs if the occupant were to be urged forwards relative to the seat.
- The lower parts of the occupant's thighs are supported by the forward bladder 15 of the base cushion pad.
- The lumbar region of the occupant's back rests on the lumbar cushion pad 11.
- The thoracic region of the occupant's back rests on the thoracic cushion pad 13.
- The occupant's head may rest on the head cushion pad 13, or the head cushion pad pay be available to restrain the occupant's head against excessive rearward motion.
- The outer sides of the occupant's thighs are restrained laterally by the thigh bolster cushion pads 8.
- The outer sides of the occupant's waist are restrained laterally by the waist bolster cushion pads 10, 12.

The seat has a rigid shell which interconnects its base part 2 and its squab part 3 in such a way that they cannot be articulated with respect to each other. Such a single-piece seat is sometimes termed a bucket seat. A problem with typical bucket seats is that they cannot be readily adjusted to fit an occupant. In particular the rake angle between the base surface on which the occupant sits and the squab surface which supports the lumbar and/or thoracic regions of the user's back cannot readily be altered. With the present seat that angle can be altered by inflation or deflation of the bladders 11 and 13. To provide a more upright seating position bladders 17 and 18 can be inflated, and to provide a more inclined seating position they can be deflated. In this way, embodiments of the present seat can provide a light-weight seat comparable to a bucket seat, having rake adjustment without the need for a mechanical adjustment mechanism interconnecting the seat base and the seat squab.

The bladder arrangement shown in the figures can provide modes of adjustment that are not offered by typical vehicle seats. Some of these may be particularly suitable for sports car use.
1. The user may be able to adjust their height by inflation/deflation of the bladder 16. This may provide height adjustment with less weight than a mechanical mechanism for raising or lowering the body of the seat.
2. The user may be able to adjust the inclination of their back by inflation/deflation of the bladders 17, 18. In a typical vehicle seat, the squab is adjustable for rake, and the rake adjustment alters the inclination of the entire squab as a single unit. However, there are situations where it can be beneficial to alter the inclination of the occupant's thoracic/torso region independently of the inclination of their lumbar region. One reason for this is simply to provide increased comfort. Another reason is that for high performance driving it can be beneficial to keep the occupant's torso relatively upright even if their lumbar region is relatively inclined, whereas for relaxed driving an occupant may prefer to have their entire back relatively inclined, or might prefer for their entire back to be more upright. The seat of figures 1 and 2 has separate bladders 17, 18 for the lumbar and thoracic regions, and is hence able to provide separate adjustment of the occupant's lumbar and torso angles. One input element of the user interface 53 may influence back inclination. The control unit 52 may be configured to, in response to actuation of that element, alter the level of inflation of bladders 17 and 18 in coordination so as to alter the occupant's overall back angle. Another user input element of the user interface 53 may influence lower back inclination whilst upper back inclination remains substantially constant. The control unit 52 may be configured to, in response to actuation of that element, alter the level of inflation of bladder 17 and optionally bladder 18 so as to alter the occupant's lower back angle without substantially altering their upper back angle. The shape of the shell 1 and the extent to which the bladders 17, 18 can be inflated or deflated influence the range of thoracic angles that may be achieved. The seat may be configured so that the minimum achievable inclination of the user's torso (as measured on the seat surface) is less than 30° to vertical, less than 28° to vertical or less than 26° to vertical and/or so that the maximum achievable inclination of the user's torso (as measured on the seat surface) is more than 28° to vertical, more than 30° to vertical or more than 32° to vertical. A maximum inclination in the range from 32° to 36° may be achievable. This represents a relatively extreme level of inclination for a one-piece seat that can also offer less extreme driving positions without rotation of the seat shell.
3. When a driver is driving on the road he will not generally wear a helmet. On the track a helmet may be desirable or mandatory. A helmet extends rearwardly of a driver's head. This means that a headrest that is positioned just behind a driver's head, which would be good for road use, may force the driver's head too far forwards when he is wearing a helmet. The seat of figures 1 and 2 can accommodate this by inflation or deflation of the headrest bladder 19. When the driver is not wearing a helmet the bladder 19 can be relatively inflated. When the driver is wearing a helmet the bladder 19 can be relatively deflated so that its outer surface is forward of where it would be in the non-helmet configuration. The vehicle may have a dedicated user interface input element (e.g. a switch or push-button) 55 (see figure 3) for switching between an inflated and a deflated state of the headrest bladder. That input element may be marked with a helmet symbol. The control unit 52 may be configured to respond to actuation of the element to alter the bladder 19 from one of the inflated or non-inflated conditions to the other. The control unit may be configured to enable the user to implement fine variation of the inflation state of bladder 19. Alternatively, the control unit may be able to impose just two stable states of the bladder, corresponding to helmet and non-helmet modes.

The operation of the bladders may be controlled in conjunction with other functions of a vehicle in which the seat is installed. For example, the vehicle may have one or more user input elements 56 which cause the handling and/or drivetrain of the vehicle to switch between operating in a more comfort-oriented mode and operating in a more performance-oriented mode. These elements may function as described in GB 2 473 294. The control unit 52 may be configured to receive inputs from user input element 56 and to, in response to the user input element going to a setting that causes more performance-oriented operation of the vehicle, automatically cause the seat to adopt a predetermined configuration: e.g. one that is more or less performance-orientated than before.

In the seat of figure 2, there is no more than a single bladder between the seating surface of the seat and the seat shell. In other designs, multiple bladders could overlap each other. This may make it convenient to adjust larger portions of the seat in a coordinated manner. It may assist in providing a greater range of adjustment to a portion of the seat. Multiple overlapping bladders could be inflated sequentially or at the same time.

Each bladder may be a flexible-walled bag.

The shape of the seating surface of the seat might vary for a given weight or build of occupant. The extent to which this happens may depend on the construction and elasticity of the bladders. In order to allow the control unit 52 to more reliably set the seating surface to a particular conformation it may be advantageous to sense the pressure in one or more of the bladders and for the control unit to be configured so that the level of inflation it commands for a bladder is dependent on the pressure sensed in that bladder. The pressure may be sensed in the bladder itself or in the manifold, where the pressure in the appropriate tube 54 can be sensed.

The seat shell 1 may be mounted on a mechanical mechanism that permits it to be adjusted for height, angle and longitudinal position.

The seat may be usable in a vehicle such as a car, truck, aircraft or boat, in a vehicle simulator or in a fixed application such as in a theatre.

In general, the angle of inclination of a seating surface of the seat may be determined as the angle between a reference plane perpendicular to the mid-plane of the seat and the plane having the minimum aggregate perpendicular deviation from that seating surface of the seat. Where the angle of inclination is to be assessed in an absolute sense, that reference plane should be a horizontal plane when the seat is installed in its normal attitude or the mid-point of its range of motion. Where the angle of inclination is to be assessed relative to another part of the seat, the same reference plane should be used for determining both angles. Where an angle of inclination of a relevant seating surface is defined in SAE J1100 as effective at 1 October 2016, that definition is to be preferred. For example, the angle of inclination of the squab of a seat is preferably determined with reference to the torso line of an occupant with reference to a horizontal surface when the seat is installed in a horizontal environment, e.g. in a vehicle or other object that is on a horizontal surface. This angle is termed A40 in SAE J1100.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the attached claims.

## Claims

1. A seat having a base support (2) extending under a base of the seat and a squab support (3) extending behind a squab of the seat, the squab support (3) being integral with the base support (2), the seat presenting a base seating surface upward of the base support and a squab seating surface forward of the squab support, and the seat comprising:
a first inflatable bladder (18) located in a thoracic region of the seat; and
a second inflatable bladder (17) located in a lumbar region of the seat and having a fixed position relative to the squab support;
wherein the first bladder and second bladder are both disposed between the squab support and the squab seating surface for permitting adjustment of the inclination of the squab seating surface relative to the base seating surface.

2. A seat as claimed in claim 1, wherein the base support and the squab support are portions of a laminar seat shell (1).

3. A seat as claimed in claim 1 or 2, wherein the squab seating surface is defined by an upholstery layer (30) at least partially covering the squab support, and at least one bladder is located between the squab support and the upholstery layer.

4. A seat as claimed in claim 3, comprising a resiliently compressible layer (31) located between the upholstery layer and the at least one bladder.

5. A seat as claimed in any preceding claim, wherein the bladders are such that the inclination of the squab seating surface relative to the inclination of the base seating surface can be varied by greater than 5° by inflation of the bladders.

6. A seat as claimed in any preceding claim, wherein the bladders are such that the inclination of the squab seating surface relative to the inclination of the base seating surface can be varied by greater than 8° by inflation of the bladders.

7. A seat as claimed in any preceding claim, wherein the seat comprises a headrest and the headrest is configured so that the position of the forward surface of the headrest is independent of the state of inflation of the first and second bladders.

8. A seat as claimed in claim 7, wherein the headrest comprises a headrest support (4) attached to the squab support, a headrest surface (30) forward of the headrest support and a third inflatable bladder (19) located between the headrest support and the headrest surface.

9. A seat as claimed in claim 8, wherein the headrest support is integral with the squab support.

10. A seat as claimed in any preceding claim, comprising a thigh roll (41) at the forward end of the base support, the thigh roll comprising a fourth inflatable bladder (15) located above the forward part of the base support.

11. A seat as claimed in any preceding claim, wherein the first inflatable bladder is configured for permitting adjustment of the inclination of the squab seating surface in the lumbar region relative to the base seating surface.

12. A seat as claimed in any preceding claim, wherein the second inflatable bladder is configured for permitting adjustment of the inclination of the squab seating surface in the thoracic region relative to the base seating surface.

13. A seat as claimed in any preceding claim, wherein the first inflatable bladder has a fixed position relative to the squab support.

14. A seat as claimed in any preceding claim, the seat being installed in a vehicle.

15. A vehicle having an occupant seat installed therein, the seat being as claimed in any of claim 1 to 13.

## Patentansprüche

1. Sitz mit einer Basisstütze (2), die sich unter einer Basis des Sitzes erstreckt, und einer Rückenlehnenstütze (3), die sich hinter einer Rückenlehne des Sitzes erstreckt, wobei die Rückenlehnenstütze (3) einstückig mit der Basisstütze (2) ist, wobei der Sitz eine Basissitzfläche oberhalb der Basisstütze und eine Rückenlehnensitzfläche vor der Rückenlehnenstütze aufweist, und wobei der Sitz Folgendes umfasst:
eine erste aufblasbare Blase (18), die sich in einem Thoraxbereich des Sitzes befindet; und
eine zweite aufblasbare Blase (17), die sich in einem Lendenbereich des Sitzes befindet und eine feste Position in Bezug auf die Rückenlehnenstütze aufweist;
wobei die erste Blase und die zweite Blase beide zwischen der Rückenlehnenstütze und der Rückenlehnensitzfläche angeordnet sind, um eine Anpassung der Neigung der Rückenlehnensitzfläche in Bezug auf die Basissitzfläche zu ermöglichen.

2. Sitz nach Anspruch 1, wobei die Basisstütze und die Rückenlehnenstütze Teile einer laminaren Sitzschale (1) sind.

3. Sitz nach Anspruch 1 oder 2, wobei die Rückenlehnensitzfläche durch eine Polsterschicht (30) definiert ist, die die Rückenlehnenstütze zumindest teilweise bedeckt, und wobei sich mindestens eine Blase zwischen der Rückenlehnenstütze und der Polsterschicht befindet.

4. Sitz nach Anspruch 3, der eine elastisch komprimierbare Schicht (31) umfasst, die sich zwischen der Polsterschicht und der mindestens einen Blase befindet.

5. Sitz nach einem der vorhergehenden Ansprüche, wobei die Blasen derart sind, dass die Neigung der Rückenlehnensitzfläche in Bezug auf die Neigung der Basissitzfläche durch Aufblasen der Blasen um mehr als 5° verändert werden kann.

6. Sitz nach einem der vorhergehenden Ansprüche, wobei die Blasen derart sind, dass die Neigung der Rückenlehnensitzfläche in Bezug auf die Neigung der Basissitzfläche durch Aufblasen der Blasen um mehr als 8° verändert werden kann.

7. Sitz nach einem der vorhergehenden Ansprüche, wobei der Sitz eine Kopflehne umfasst und die Kopflehne so konfiguriert ist, dass die Position der vorderen Fläche der Kopflehne unabhängig von dem Aufblaszustand der ersten und der zweiten Blase ist.

8. Sitz nach Anspruch 7, wobei die Kopflehne eine Kopflehnenstütze (4), die an der Rückenlehnenstütze befestigt ist, eine Kopflehnenfläche (30) vor der Kopflehnenstütze und eine dritte aufblasbare Blase (19), die sich zwischen der Kopflehnenstütze und der Kopflehnenfläche befindet, umfasst.

9. Sitz nach Anspruch 8, wobei die Kopflehnenstütze einstückig mit der Rückenlehnenstütze ist.

10. Sitz nach einem der vorhergehenden Ansprüche, der eine Oberschenkelrolle (41) am vorderen Ende der Basisstütze umfasst, wobei die Oberschenkelrolle eine vierte aufblasbare Blase (15) umfasst, die sich oberhalb des vorderen Teils der Basisstütze befindet.

11. Sitz nach einem der vorhergehenden Ansprüche, wobei die erste aufblasbare Blase so konfiguriert ist, dass sie eine Anpassung der Neigung der Rückenlehnensitzfläche im Lendenbereich in Bezug auf die Basissitzfläche ermöglicht.

12. Sitz nach einem der vorhergehenden Ansprüche, wobei die zweite aufblasbare Blase so konfiguriert ist, dass sie eine Anpassung der Neigung der Rückenlehnensitzfläche im Thoraxbereich in Bezug auf die Basissitzfläche ermöglicht.

13. Sitz nach einem der vorhergehenden Ansprüche, wobei die erste aufblasbare Blase eine feste Position in Bezug auf die Rückenlehnenstütze aufweist.

14. Sitz nach einem der vorhergehenden Ansprüche, wobei der Sitz in einem Fahrzeug installiert ist.

15. Fahrzeug mit einem darin installierten Insassensitz, wobei der Sitz so ist, wie in einem der Ansprüche 1 bis 13 beansprucht.

## Revendications

1. Siège ayant un support de base (2) s'étendant sous une base du siège et un support de coussin (3) s'étendant derrière un coussin du siège, le support de coussin (3) étant solidaire du support de base (2), le siège présentant une surface d'assise de base vers le haut du support de base et une surface d'assise de coussin à l'avant du support de coussin, et le siège comprenant :
une première vessie gonflable (18) située dans une région thoracique du siège ; et
une deuxième vessie gonflable (17) située dans une région lombaire du siège et ayant une position fixe par rapport au support de coussin ;
dans lequel la première vessie et la deuxième vessie sont toutes deux disposées entre le support de coussin et la surface d'assise du coussin pour permettre le réglage de l'inclinaison de la surface d'assise du coussin par rapport à la surface d'assise de base.

2. Siège selon la revendication 1, dans lequel le support de base et le support de coussin sont des parties d'une coque de siège laminaire (1).

3. Siège selon la revendication 1 ou 2, dans lequel la surface d'assise de coussin est définie par une couche de rembourrage (30) recouvrant au moins partiellement le support de coussin, et au moins une vessie est située entre le support de coussin et la couche de rembourrage.

4. Siège selon la revendication 3, comprenant une couche élastiquement compressible (31) située entre la couche de rembourrage et la au moins une vessie.

5. Siège selon l'une quelconque des revendications précédentes, dans lequel les vessies sont telles que l'inclinaison de la surface d'assise du coussin par rapport à l'inclinaison de la surface d'assise de la base peut être modifiée de plus de 5° par gonflage des vessies.

6. Siège selon l'une quelconque des revendications précédentes, dans lequel les vessies sont telles que l'inclinaison de la surface d'assise du coussin par rapport à l'inclinaison de la surface d'assise de la base peut être modifiée de plus de 8° par gonflage des vessies.

7. Siège selon l'une quelconque des revendications précédentes, dans lequel le siège comprend un appuie-tête et l'appuie-tête est configuré de telle sorte que la position de la surface avant de l'appuie-tête est indépendante de l'état de gonflage des première et deuxième vessies.

8. Siège selon la revendication 7, dans lequel l'appuie-tête comprend un support d'appuie-tête (4) fixé au support de coussin, une surface d'appuie-tête (30) à l'avant du support d'appuie-tête et une troisième vessie gonflable (19) située entre le support d'appuie-tête et la surface d'appuie-tête.

9. Siège selon la revendication 8, dans lequel le support d'appuie-tête est solidaire du support de coussin.

10. Siège selon l'une quelconque des revendications précédentes, comprenant un rouleau pour cuisses (41) à l'extrémité avant du support de base, le rouleau pour cuisses comprenant une quatrième vessie gonflable (15) située au-dessus de la partie avant du support de base.

11. Siège selon l'une quelconque des revendications précédentes, dans lequel la première vessie gonflable est configurée pour permettre le réglage de l'inclinaison de la surface d'assise de coussin dans la région lombaire par rapport à la surface d'assise de base.

12. Siège selon l'une quelconque des revendications précédentes, dans lequel la deuxième vessie gonflable est configurée pour permettre le réglage de l'inclinaison de la surface d'assise du coussin dans la région thoracique par rapport à la surface d'assise de la base.

13. Siège selon l'une quelconque des revendications précédentes, dans lequel la première vessie gonflable a une position fixe par rapport au support d'assise.

14. Siège selon l'une quelconque des revendications précédentes, le siège étant installé dans un véhicule.

15. Véhicule dans lequel est installé un siège d'occupant, le siège étant selon l'une quelconque des revendications 1 à 13.
